# EUROPEAN PATENT APPLICATION

(11) **EP 3 730 368 A1**
(43) Date of publication of application: **28.10.2020**
(21) Application number: 20162747.8
(22) Date of filing: 12.03.2020
(51) Int. Cl.: B60W 30/09, B60W 30/18, B60W 30/095, B60W 50/14

(54) **VEHICLE CONTROL DEVICE, METHOD AND COMPUTER PROGRAM PRODUCT**

(30) Priority: 24.04.2019 JP 2019082578
(71) Applicant: Mazda Motor Corporation, Hiroshima 730-8670 (JP)
(72) Inventor: OHMURA, Hiroshi, Fuchu-cho, Aki-gun, Hiroshima 730-8670 (JP)
(74) Representative: Müller-Boré & Partner Patentanwälte PartG mbB

(57) **Abstract**

A vehicle control device 100 includes a controller 10 configured to set a plurality of candidate paths extending from an own vehicle 1, and assist traveling of the own vehicle 1 based on the plurality of candidate paths. The controller 10 is configured to set, between the own vehicle 1 and a crossing vehicle 8, a virtual area W which is configured to move with advance of the crossing vehicle 8, and which is configured to extend in an advancing direction of the crossing vehicle 8, and set the plurality of candidate paths such that the plurality of candidate paths are prevented from passing through the virtual area W.

## Description

### BACKGROUND OF THE INVENTION

### Field of the Invention

The present disclosure relates to a vehicle control device which assists traveling of a vehicle, a vehicle control method and a computer program product.

### Description of the Related Art

As an algorithm which is used for setting candidate paths of a vehicle (for example, candidates which may form a target path in which the vehicle is caused to actually travel), methods are known, such as a potential method, a spline interpolation function, A-star (A*), rapidly-exploring random tree (RRT), and a state lattice method. Further, a vehicle driving support system is also proposed which uses one or more of such algorithms.

According to one or more of the above-mentioned algorithms, it may become possible to set a plurality of candidate paths on a traveling road for the vehicle. From a viewpoint of avoiding obstacles and the like, a path cost of each candidate path may be calculated, and one candidate path which is determined as an appropriate candidate path based on the calculation result may be selected as a target path. For example, International Publication No. WO 2013/051081 (patent document 1) discloses a vehicle driving support system where a plurality of candidate paths are set on a grid map, and one candidate path is selected based on the movement cost.

### SUMMARY OF THE INVENTION

In the system disclosed in patent document 1, the movement costs in all cells through which the candidate paths pass are calculated, and, thus, the system may have a high calculation load. When the own vehicle enters an intersecting lane (e.g., a lane intersecting with the own-vehicle lane at an intersection), it may be required to promptly avoid a collision between the own vehicle and a crossing vehicle (e.g., a vehicle traveling in the intersecting lane). In such a situation, there may be a concern that such a method may have extremely low practicability.

The present disclosure has been made to overcome one or more of the above-mentioned problems. It is an object of the present invention to provide a vehicle control device, a vehicle control method and/or a computer program product which can set candidate paths capable of reducing a calculation load while avoiding a collision between the own vehicle and the crossing vehicle when the own vehicle enters the intersecting lane.

Thus, according to an aspect, the problem relates to avoiding a collision between the own vehicle and the crossing vehicle when the own vehicle enters in the intersecting lane with a reduced calculation load. This may lead to a prompt determination of a target path for the own vehicle, thereby enabling timely operation of the own vehicle for avoiding a collision between the own vehicle and the crossing vehicle.

The above-stated problem is solved by the features disclosed by the independent claims. Further exemplary embodiments are defined by the dependent claims.

According to an aspect, a vehicle control device is disclosed. The vehicle control device is configured to assist traveling of a vehicle. Further, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, the vehicle control device includes: a crossing vehicle detection sensor configured to detect the crossing vehicle approaching the own vehicle while traveling in the intersecting lane; and a controller configured to set a plurality of candidate paths extending from the own vehicle, and assist traveling of the own vehicle based on the plurality of candidate paths, wherein the controller is configured to set, between the own vehicle and the crossing vehicle, a virtual area which is configured to move with advance of the crossing vehicle, and which is configured to extend in an advancing direction of the crossing vehicle, and set the plurality of candidate paths such that the plurality of candidate paths are prevented from passing through the virtual area.

In various aspects and embodiments described herein, in some circumstances, the "virtual area" may be considered as a "virtual wall".

Accordingly, in some circumstances, the vehicle control device of the above-stated aspect may, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, comprise:
a crossing vehicle detection sensor configured to detect the crossing vehicle approaching the own vehicle while traveling in the intersecting lane; and
a controller configured to set a plurality of candidate paths extending from the own vehicle, and assist traveling of the own vehicle based on the plurality of candidate paths, wherein
the controller is configured to set, between the own vehicle and the crossing vehicle, a virtual wall which is configured to move with advance of the crossing vehicle, and which is configured to extend in an advancing direction of the crossing vehicle, and set the plurality of candidate paths such that the plurality of candidate paths are prevented from passing through the virtual wall.

It is noted that, in various aspects and embodiments as described herein, one or more process steps performed with respect to a virtual area may be performed with respect to a virtual wall in an analogous manner.

According to the configuration of the aspect as stated above, the controller can set the virtual area. The virtual area can be configured to move with the advance of the crossing vehicle, and to extend in the advancing direction of the crossing vehicle. The controller can set such a virtual area between the own vehicle and the crossing vehicle, and set the plurality of candidate paths such that the plurality of candidate paths are prevented from passing through the virtual area. With such a configuration, it may be possible to set the plurality of candidate paths for causing the own vehicle to travel such that a collision between the own vehicle and the crossing vehicle is avoided with certainty. Further, the controller does not set a candidate path which passes through the virtual area and hence, it may be possible to reduce a calculation load for the candidate path. In other words, according to the present invention, it may be possible to set the candidate paths which are capable of reducing a calculation load while avoiding a collision between the own vehicle and the crossing vehicle.

In some exemplary embodiments, the controller may be configured to set one or more of the plurality of candidate paths to extend from the own vehicle to a point in front of the virtual area.

Further, in some exemplary embodiments, the controller may be configured to set the candidate path which extends from the own vehicle to a point in front of the virtual area.

In various aspects and embodiments described herein, the "point in front of the virtual area" may be understood as a point that is arranged, on a path extending from the own vehicle towards the virtual area to intersect with the virtual area, before the path reaches a periphery of the virtual area.

According to this configuration, it may be possible to set various candidate paths including candidate paths for causing the own vehicle to stop at the point in front of the virtual area. As a result, it may be possible to set the candidate paths which can avoid a collision with the crossing vehicle with more certainty.

In some exemplary embodiments, the controller may be configured to set the virtual area having a length which corresponds to a time required for the own vehicle to finish passing through the intersecting lane where the crossing vehicle travels, or a time required for the own vehicle to finish merging into the intersecting lane where the crossing vehicle travels. To "merge" may mean to travel in the advancing direction specified in the intersecting lane.

The own vehicle which finishes passing through the intersecting lane or the own vehicle which finishes merging into the intersecting lane can avoid a collision with a crossing vehicle. For example, "a time required for the own vehicle to finish passing through the intersecting lane where the crossing vehicle travels, or a time required for the own vehicle to finish merging into the intersecting lane where the crossing vehicle travels" may mean the time required for the own vehicle to finish moving to a position where a collision with the crossing vehicle can be avoided.

According to the above-mentioned configuration, the controller can set the length of the virtual area to a value which corresponds to the time required for the own vehicle to finish moving to a position where a collision with the crossing vehicle can be avoided. By setting the virtual area having such a length, it may be possible to avoid a collision between the own vehicle and the crossing vehicle with certainty.

In some exemplary embodiments, the controller may be configured to set the length of the virtual area based on a distance obtained by multiplying a speed of the crossing vehicle by the time required for the own vehicle to finish passing through the intersecting lane where the crossing vehicle travels, or by the time required for the own vehicle to finish merging into the intersecting lane where the crossing vehicle travels.

According to this configuration, the controller can set the length of the virtual area to a value which corresponds to the time required for the own vehicle to finish moving to a position where a collision with the crossing vehicle can be avoided, and which corresponds to the speed of the crossing vehicle. By setting the virtual area having such a length, it may be possible to avoid a collision between the own vehicle and the crossing vehicle with certainty.

Further, according to another aspect, a vehicle control method is provided for assisting traveling of a vehicle. The vehicle control method, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, comprises:
detecting, by a crossing vehicle detection sensor, the crossing vehicle approaching the own vehicle while traveling in the intersecting lane;
setting, by a controller, a plurality of candidate paths extending from the own vehicle; and
assisting, by the controller, traveling of the own vehicle based on the plurality of candidate paths,
wherein the method further comprises, for setting the plurality of the candidate paths:
   setting, by the controller, between the own vehicle and the crossing vehicle, a virtual area which is configured to move with advance of the crossing vehicle, and which is configured to extend in an advancing direction of the crossing vehicle; and
   setting, by the controller, the plurality of candidate paths such that the plurality of candidate paths are prevented from passing through the virtual area.

In the method according to the above-stated aspect, one or more of the plurality of candidate paths may be set to extend from the own vehicle to a point in front of the virtual area.

Further, in the method according to the above-stated aspect, when setting the virtual area, the controller may set the virtual area having a length which corresponds to a time required for the own vehicle to finish passing through the intersecting lane where the crossing vehicle travels, or a time required for the own vehicle to finish merging into the intersecting lane.

In some exemplary embodiments, the controller may set the length of the virtual area based on a distance obtained by multiplying a speed of the crossing vehicle by the time required for the own vehicle to finish passing through the intersecting lane where the crossing vehicle travels, or by the time required for the own vehicle to finish merging into the intersecting lane.

Further, according to yet another aspect, a computer program product is provided. The computer program product comprises computer-readable instructions that, when loaded and run on a computer, cause the computer to perform the method according to the above-stated aspect and various exemplary embodiments thereof.

According to various aspects and embodiments described herein, it may be possible to set the candidate paths which are capable of reducing a calculation load while avoiding a collision between the own vehicle and the crossing vehicle when the own vehicle enters the intersecting lane.

### BRIEF DESCRIPTION OF THE DRAWINGS

FIG. 1 is a block diagram showing a schematic configuration of a vehicle control device according to an embodiment;
FIG. 2 is an explanatory view of candidate paths according to the embodiment;
FIG. 3 is an explanatory view of the candidate path according to the embodiment; and
FIG. 4 is a flowchart showing a process performed by a controller according to the embodiment.

### DETAILED DESCRIPTION OF THE PREFERRED EMBODIMENTS

Hereinafter, a vehicle control device according to an exemplary embodiment will be described with reference to attached drawings.

### <Configuration of vehicle control device>

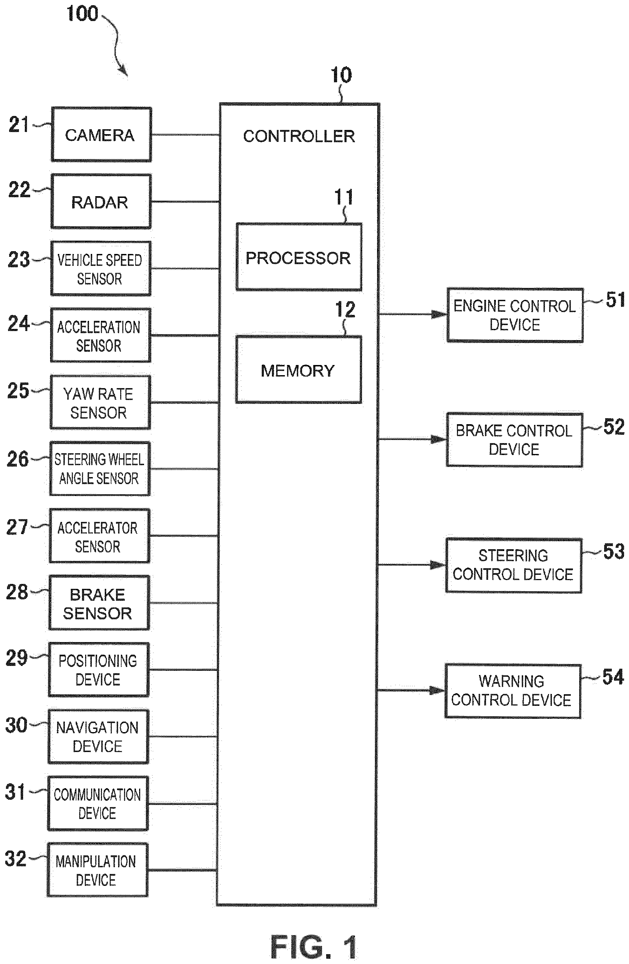

First, the configuration of a vehicle control device 100 according to an exemplary embodiment will be described with reference to FIG. 1. FIG. 1 is a block diagram showing an exemplary schematic configuration of the vehicle control device 100 according to the exemplary embodiment.

As shown in FIG. 1, the vehicle control device 100 may mainly include a controller 10, such as an ECU (Electronic Control Unit), a plurality of sensors and/or switches, and a plurality of control devices. This vehicle control device 100 may be mounted on a vehicle, and performs various controls to assist traveling of the vehicle.

The plurality of sensors and/or switches may include, but are not limited to, a camera 21, a radar 22, a plurality of behavior sensors (e.g., a vehicle speed sensor 23, an acceleration sensor 24, a yaw rate sensor 25, etc.) which detect behavior of the vehicle, a plurality of behavior switches (e.g., a steering wheel angle sensor 26, an accelerator sensor 27, a brake sensor 28, etc.), a positioning device 29, a navigation device 30, a communication device 31, and/or a manipulation device 32. Further, the plurality of control devices may include, but are not limited to, an engine control device 51, a brake control device 52, a steering control device 53, and/or a warning control device 54.

The controller 10 may comprise a processor 11 and a memory 12 which may store various programs executed by the processor 11. The controller 10 may optionally further include a computer device including an input/output device and the like. The controller 10 may be configured such that, based on signals received from the above-mentioned plurality of sensors and switches, the controller 10 can output control signals to the engine control device 51, the brake control device 52, the steering control device 53, and/or the warning control device 54 for appropriately operating an engine device, a braking device, a steering device, and/or a warning device. Particularly, in this exemplary embodiment, as will be described later, the controller 10 sets a plurality of candidate paths for the own vehicle, on which the controller 10 is mounted, and the controller 10 assists traveling of the own vehicle based on the candidate paths.

The camera 21 may photograph an area around the vehicle, and output image data. The controller 10 may identify various objects based on the image data received from the camera 21. For example, the controller 10 may identify a preceding vehicle, a crossing vehicle, parked vehicles, motorcycles, pedestrians, the traveling road, division lines (e.g., a center line, lane boundary lines, white lines, yellow lines), the traffic zone and the traffic division of a lane, traffic lights, traffic signs, stop lines, intersections, obstacles and the like.

The radar 22 may measure positions and speeds of various objects which are present in the area around the vehicle. For example, the radar 22 may measure positions and speeds of a preceding vehicle, a crossing vehicle, parked vehicles, pedestrians, a falling object on the traveling road and the like. A millimeter wave radar may be used as the radar 22, for example. This radar 22 may transmit radio waves in the advancing direction of the vehicle, and may receive reflected waves generated due to reflection of the transmitted waves on an object. Then, based on the transmitted waves and the received waves, the radar 22 may measure a distance between the vehicle and the object (an inter-vehicle distance, for example) and the relative speed of the object with respect to the vehicle.

Note that a laser radar may be used as the radar 22 in place of the millimeter wave radar, or an ultrasonic sensor or another sensor may also be used in place of the radar 22. Further, the position and the speed of an object may also be measured by using the plurality of sensors in combination.

The vehicle speed sensor 23 may detect the speed of the vehicle (also referred to as the "vehicle speed"). The acceleration sensor 24 may detect acceleration of the vehicle. The yaw rate sensor 25 may detect a yaw rate generated in the vehicle. The steering wheel angle sensor 26 may detect the rotation angle (e.g., steering angle) of a steering wheel of the vehicle. The accelerator sensor 27 may detect the pressing amount of an accelerator pedal. The brake sensor 28 may detect the pressing amount of a brake pedal. The controller 10 can calculate the speed of an object based on the speed of the vehicle, which may be detected by the vehicle speed sensor 23, and the relative speed of the object, which may be detected by the radar 22.

The positioning device 29 may include a GPS receiver and/or a gyro sensor, and may detect the position of the vehicle (in other words, "current vehicle position information"). The navigation device 30 may store map information therein, and can provide the map information to the controller 10. Based on the map information and the current vehicle position information, the controller 10 may identify, roads, intersections, traffic lights, buildings and the like which are present in the area around the vehicle (particularly in the advancing direction). The map information may be stored in the controller 10. Further, the map information may include information relating to the traffic zone and/or the traffic division of a lane.

The communication device 31 may perform inter-vehicle communication with other vehicles around the own vehicle, and may perform road-vehicle communication with road-side communication devices installed in the area around the own vehicle. The communication device 31 may acquire, through such inter-vehicle communication and road-vehicle communication, communication data from other vehicles and traffic data (e.g., traffic congestion information, speed limit information, traffic light information and the like) from transportation infrastructure, and the communication device 31 may output these data to the controller 10.

The manipulation device 32 may be an input device which is provided in a cabin, and which is operated by a driver for performing various settings relating to the vehicle. For example, the manipulation device 32 may include switches and buttons provided to an instrument panel, a dash panel, and a center console, a touch panel provided to a display device and the like. The manipulation device 32 may output a manipulation signal which corresponds to the manipulation of the driver to the controller 10. Particularly in this exemplary embodiment, the manipulation device 32 is configured to be capable of switching between ON and OFF of a control for assisting traveling of the vehicle, and to be capable of adjusting contents of control for assisting traveling of the vehicle.

Note that at least one of the camera 21, the radar 22 and the communication device 31 may be considered as one example of the "crossing vehicle detection sensor" according to the present disclosure.

The engine control device 51 may control the engine of the vehicle. The engine control device 51 may be a component which can adjust an engine output (e.g., driving force). For example, the engine control device 51 may include a variable valve train and the like which vary opening/closing timing of a spark plug, a fuel injection valve, a throttle valve, and an intake and exhaust valve. When it is necessary to cause the vehicle to accelerate or decelerate, the controller 10 may transmit, to the engine control device 51, a control signal to change an engine output.

The brake control device 52 may control the braking device of the vehicle. The brake control device 52 may be a component which can adjust a braking force generated by the braking device, and may include brake actuators, such as a hydraulic pump and a valve unit, for example. When it is necessary to cause the vehicle to decelerate, the controller 10 may transmit, to the brake control device 52, a control signal to generate a braking force.

The steering control device 53 may control the steering device of the vehicle. The steering control device 53 may be a component which can adjust the steering angle of the vehicle, and may include an electric motor and the like of an electric power steering system, for example. When it is necessary to change the advancing direction of the vehicle, the controller 10 may transmit, to the steering control device 53, a control signal to change a steering direction.

The warning control device 54 may control a warning device which can issue a predetermined warning to a driver. This warning device may be the display device, a speaker and the like provided to the vehicle. For example, when a possibility of a collision of the own vehicle with an object increases, the controller 10 may transmit a control signal to the warning control device 54 to issue a warning from the warning device. Particularly in this example, the controller 10 causes an image for notifying a high possibility of a collision with the object to be displayed on the display device, and/or causes voice for notifying a high possibility of a collision with the object to be outputted from the speaker.

### <Own vehicle traveling assistance performed by the controller>

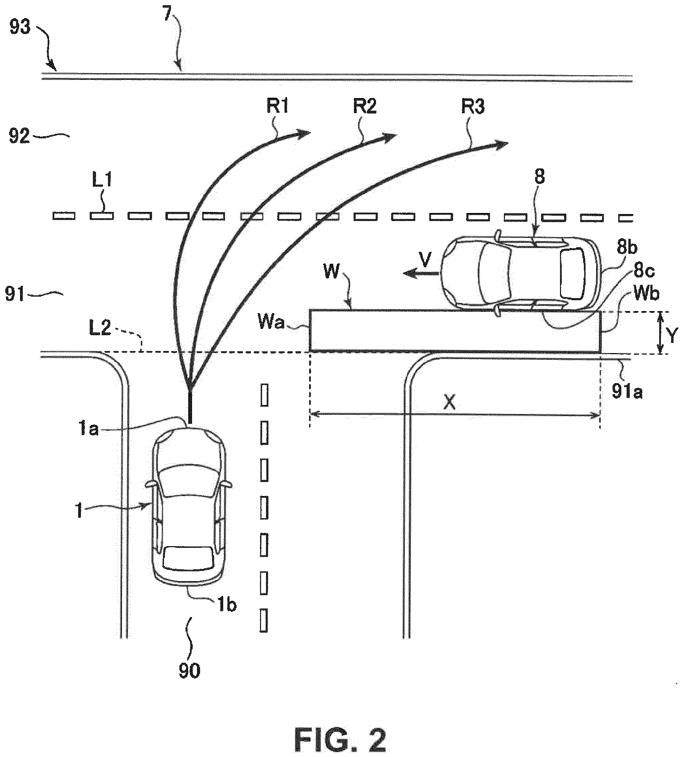

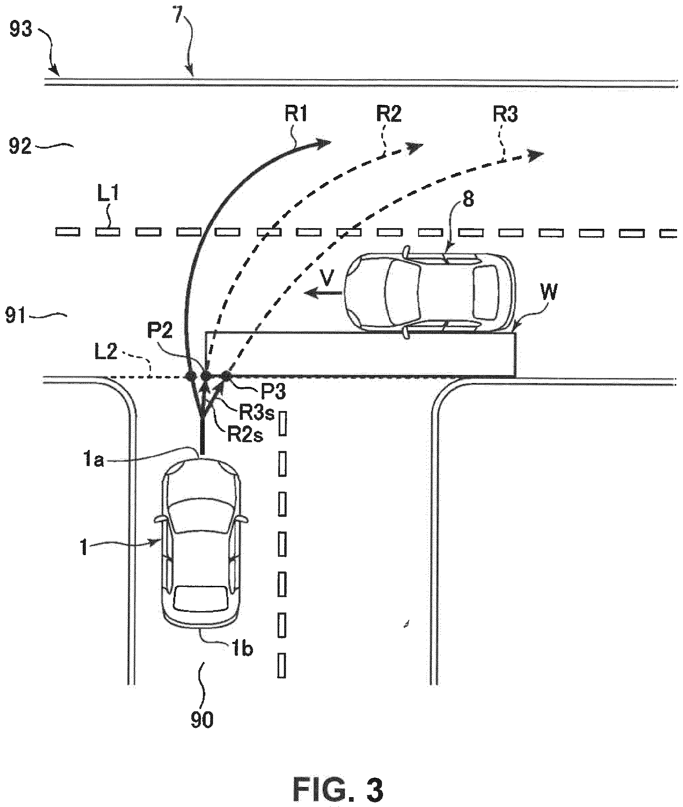

Next, exemplary own vehicle traveling assistance performed by the controller 10 will be described. Particularly in this exemplary embodiment, when the own vehicle enters an intersecting lane (the intersecting lane may be understood as a lane intersecting with an own-vehicle lane at an intersection when the own vehicle traveling in the own-vehicle lane enters the intersection), the controller 10 sets a plurality of candidate paths to avoid a collision between the own vehicle and a crossing vehicle which travels in the intersecting lane. FIG. 2 and FIG. 3 show an exemplary environment where, as in the case of traffic conditions in Japan, vehicles traveling in the left lane is specified by traffic regulations.

First, the description will be made, with reference to FIG. 2, with respect to exemplary candidate paths in the case where a crossing vehicle is traveling at a position relatively away from the own vehicle. FIG. 2 is an explanatory view of the exemplary candidate paths according to the exemplary embodiment.

In the specific example shown in FIG. 2, an own-vehicle lane 90 intersects with an intersecting road 93 at an intersection 7. Further in this specific example, the intersecting road 93 includes a first intersecting lane 91, to which the own-vehicle lane 90 is connected, and a second intersecting lane 92 provided at a position separated more from the own-vehicle lane 90 than the first intersecting lane 91. In this specific example, the first intersecting lane 91 and the second intersecting lane 92 are divided by a division line L1. In this specific example, the first intersecting lane 91 is provided to allow vehicles to travel in the left direction in FIG. 2, and the second intersecting lane 92 is an opposite lane of the first intersecting lane 91. The first intersecting lane 91 and the second intersecting lane 92 may be understood as examples of the "intersecting lane" according to the present disclosure.

In the specific example shown in FIG. 2, the own vehicle 1 travels in the own-vehicle lane 90, and enters the intersection 7. In this specific example, the own vehicle 1 is attempting to pass through the first intersecting lane 91 while turning right at the intersection 7, and to merge into the second intersecting lane 92. Whereas a crossing vehicle 8 is, in this specific example, traveling in the first intersecting lane 91 at a speed V (which may be an absolute value), and is attempting to enter the intersection 7. In other words, the crossing vehicle 8 is approaching the own vehicle 1 from the right side of the own vehicle 1.

In such a situation, the controller 10 may set a plurality of candidate paths (e.g., candidates one of which may become a target path in which the own vehicle 1 is caused to actually travel) which can avoid a collision between the own vehicle 1 and the crossing vehicle 8. For example, the controller 10 may set, via a path search which uses a state lattice method, a plurality of candidate paths which extend from a front end 1a of the own vehicle 1 in the advancing direction of the own vehicle 1 while branching.

FIG. 2 show exemplary candidate paths R1 to R3 set by the controller 10. In FIG. 2, each of the exemplary candidate paths R1 to R3 extends from the front end 1a of the own vehicle 1 to the second intersecting lane 92 through the first intersecting lane 91 by a value (for example, 100 m) which is specified in advance. For example, the controller 10 may set a plurality of virtual grid points (not shown in the drawing) on the own-vehicle lane 90 and the intersecting road 93 at predetermined intervals (for example, 10 cm intervals), and may set the candidate paths R1 to R3, each of which extends to connect the plurality of grid points.

The controller 10 may also set a virtual area W. The virtual area W may be a virtual object set for avoiding a collision between the own vehicle 1 and the crossing vehicle 8. The virtual area W may be set between the own vehicle 1 and the crossing vehicle 8, and may extend in the advancing direction of the crossing vehicle 8 along an end portion 91a of the first intersecting lane 91. The end portion 91a of the first intersecting lane 91 may be defined based on curbstones and/or a white line provided to the first intersecting lane 91, for example. The controller 10 may set a virtual extension L2 which extends along the end portion 91a for a portion of the first intersecting lane 91 to which the own-vehicle lane 90 is connected. Further, the controller 10 may set the virtual area W along the extension L2. The virtual area W may have a length X specified by a front end Wa on the side of the own vehicle 1 and a rear end Wb on the side of the crossing vehicle 8 (in other words, a length from the front end Wa to the rear end Wb). The rear end Wb may be set at a position which corresponds to a rear end 8b of the crossing vehicle 8.

The controller 10 may set the length X of the virtual area W to correspond to the time required for the own vehicle 1 to finish passing through the first intersecting lane 91 while turning right. Specifically, the controller 10 may first calculate a time te required for the own vehicle 1 to finish passing through the first intersecting lane 91 (in other words, the time required for the own vehicle 1 to finish merging into the second intersecting lane 92). To be more specific, the controller 10 may first calculate an approximate time required for a rear end 1b of the own vehicle 1 to arrive at the division line L1, and the controller 10 may use the approximate time as the time te required for the own vehicle 1 to finish passing through the first intersecting lane 91.

The controller 10 may set the length X based on the formula expressed by "X=V×te". In other words, the controller 10 may set the length X of the virtual area W to a value which corresponds to the time te required for the own vehicle 1 to finish passing through the first intersecting lane 91 and to the speed V of the crossing vehicle 8.

Further, the controller 10 may set the virtual area W between the crossing vehicle 8 and the end portion 91a of the first intersecting lane 91. To be more specific, the virtual area W may have a width Y ranging from a side surface portion 8c of the crossing vehicle 8 to the end portion 91a of the first intersecting lane 91.

The controller 10 may cause the virtual area W having such a shape to move with the advance of the crossing vehicle 8 (in other words, may cause the virtual area W to advance toward the own vehicle 1 together with the crossing vehicle 8). The controller 10 may set the plurality of candidate paths based on this virtual area W.

Specifically, the controller 10 may set the plurality of candidate paths such that the plurality of candidate paths are prevented from passing through the virtual area W. As shown in FIG. 2, in the case where the crossing vehicle 8 is sufficiently separated from the own vehicle 1, none of the exemplary candidate paths R1 to R3 extending from the front end 1a of the own vehicle 1 intersects with the virtual area W. This may mean that in any case where the own vehicle 1 travels along any one of the candidate paths R1 to R3, a possibility of a collision of the own vehicle 1 with the crossing vehicle 8 is relatively low. Accordingly, the exemplary candidate paths R1 to R3 which extend from the front end 1a of the own vehicle 1 by a value specified in advance are set.

The controller 10 may calculate path costs of the candidate paths R1 to R3. To be more specific, the controller 10 may first set a plurality of sampling points (not shown in the drawing) along each of the candidate paths R1 to R3. The plurality of sampling points may be arranged at intervals on each of the candidate paths R1 to R3.

Next, the controller 10 may calculate the path cost at each sampling point. Further, the controller 10 may sum the path costs at the sampling points set along the candidate path for each candidate path, and the summed value may be divided by the total length of the candidate path. The controller 10 may use the value obtained by the division as the path cost of the candidate path.

The controller 10 may select the candidate path having the minimum path cost from the candidate paths R1 to R3, and may set the selected candidate path as a target path. The controller 10 may assist traveling of the own vehicle 1 which merges into the second intersecting lane 92 along the target path.

Next, the description will be made, with reference to FIG. 3, with respect to exemplary candidate paths in the case where a crossing vehicle is traveling at a position relatively close from the own vehicle. FIG. 3 is an explanatory view of the exemplary candidate paths according to the exemplary embodiment. The description of configurations and processes which are substantially equal to those in the above-mentioned case will be omitted when appropriate.

The virtual area W may approach the own vehicle 1 together with the crossing vehicle 8. Particularly in the specific example shown in FIG. 3, the virtual area W approaches the own vehicle 1 to an extent that the virtual area W covers a portion of the own-vehicle lane 90.

In the same manner as FIG. 2, the controller 10 may set a plurality of candidate paths which extends from the front end 1a of the own vehicle 1 in the advancing direction of the own vehicle 1 while branching. In the specific example shown in FIG. 3, when the controller 10 attempts to set the candidate path R1, the candidate path R1 can extend without intersecting with the virtual area W. This may mean that, in the case where the own vehicle 1 travels along the candidate path R1, a possibility of a collision of the own vehicle 1 with the crossing vehicle 8 is relatively low. Accordingly, the controller 10 may set the candidate path R1 which extends by a value specified in advance.

On the other hand, in the specific example shown in FIG. 3, when the controller 10 attempts to set the candidate paths R2 and R3, both candidate paths R2 and R3 intersect with the virtual area W. This may mean that, in the case where the own vehicle 1 travels along the candidate path R2 or R3, a possibility of a collision of the own vehicle 1 with the crossing vehicle 8 is relatively high. In this case, the controller 10 may set candidate paths R2s and R3s which extend from the front end 1a of the own vehicle 1 to points P2 and P3 slightly in front of the virtual area W. For example, each of the points P2 and P3 may be arranged on the respective candidate paths R2 and R3 that intersect with the virtual area W, at a point before the respective candidate paths R2 and R3 reach the periphery of the virtual area W. In other words, each of the points P2 and P3 may be arranged, on a candidate path that intersects with the virtual area W, between the own vehicle 1 and the periphery of the virtual area W. The candidate path R2s, R3s may be used for causing the own vehicle 1 to travel to the point P2 or P3, and to stop at the point P2 or P3. Each of the candidate path R2s and R3s may be a portion of the respective candidate paths R2 and R3. A portion of the respective candidate paths R2 and R3, which is not actually set (in other words, a portion which is not included in the respective candidate path R2s or R3s) is indicated by a broken line in FIG. 3. Accordingly, a calculation load at the time of the controller 10 setting the candidate paths R2s and R3s may be smaller than a calculation load at the time of the controller 10 setting the candidate paths R2 and R3.

Further, the controller 10 may calculate path costs of the candidate paths R1, R2s and R3s. The total length of the candidate path R2s and R3s is shorter than that of the candidate paths R2 and R3 and hence, the number of sampling points set along the candidate paths R2s and R3s may be smaller than the number of sampling points set along the candidate paths R2 and R3. Accordingly, a load at the time of the controller 10 calculating the path cost of the candidate paths R2s and R3s may be smaller than a load at the time of the controller 10 calculating the path cost of the candidate paths R2 and R3.

The controller 10 may select a candidate path having the minimum path cost from the candidate paths R1, R2s and R3s, and may set the selected candidate path as a target path. The controller 10 may assist traveling of the own vehicle 1 at the time of the own vehicle 1 merging into the second intersecting lane 92 along the target path (e.g., in case the candidate path R1 is selected as the target path), and traveling of the own vehicle 1 at the time of the own vehicle 1 stopping at the point P2 or P3 (e.g., in case the candidate path R2s or R3s is selected as the target path).

The above-mentioned method for setting a candidate path may also be applicable to the case where the own vehicle 1 is attempting to turn left at the intersection 7. Specifically, in the case where the own vehicle 1 is attempting to turn left at the intersection 7, the time required for the own vehicle 1 to finish merging into the first intersecting lane 91 may be calculated, and the time may be used as the above-mentioned time te. To be more specific, the controller 10 may calculate an approximate time required for the rear end 1b of the own vehicle 1 turning left to arrive at the extension L2, and the controller 10 may use the approximate time as the time te required for the own vehicle 1 to finish merging into the first intersecting lane 91. Then, the controller 10 may set the length X of the virtual area W based on the formula expressed by "X=Vxte", and may set the plurality of candidate paths based on the presence or absence of intersection with the virtual area W.

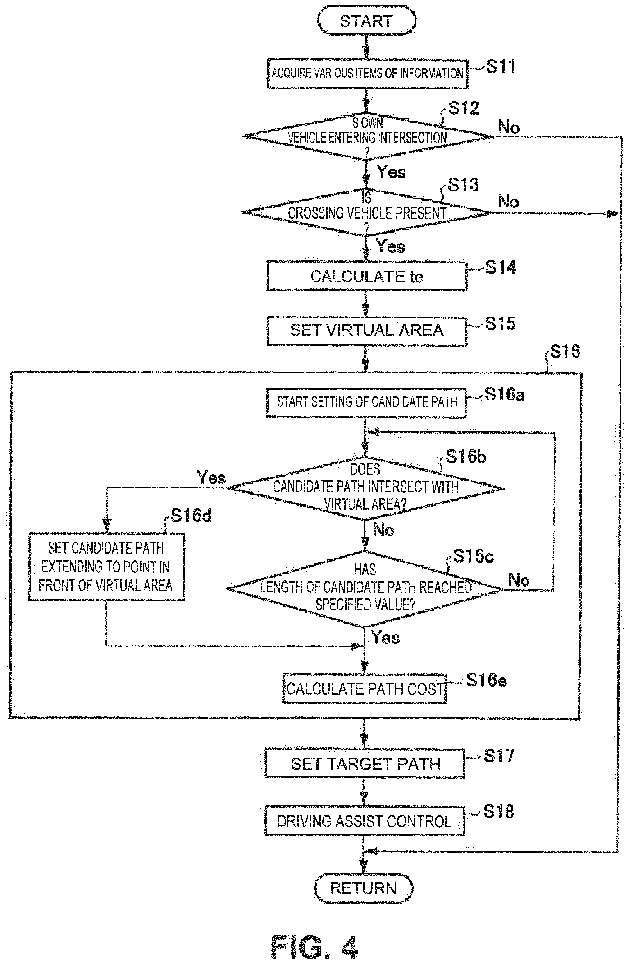

Next, an exemplary process that may be performed by the controller 10 will be described with reference to FIG. 4. FIG. 4 is a flowchart showing an exemplary process performed by the controller 10 according to the exemplary embodiment. The controller 10 may repeatedly perform the process of the flowchart in a predetermined cycle (in a 100 ms cycle, for example).

First, in step S11, the controller 10 may acquire various items of information from the above-mentioned plurality of sensors and switches. Specifically, the controller 10 may acquire various items of information based on signals inputted from the camera 21, the radar 22, the vehicle speed sensor 23, the acceleration sensor 24, the yaw rate sensor 25, the steering wheel angle sensor 26, the accelerator sensor 27, the brake sensor 28, the positioning device 29, the navigation device 30, the communication device 31, and/or the manipulation device 32.

Next, in step S12, the controller 10 may determine whether or not the own vehicle 1 is attempting to enter the intersection. Specifically, the controller 10 may determine whether or not an intersection is present in the vicinity of the own vehicle 1 and in the advancing direction of the own vehicle 1 based on signals (e.g., which correspond to image data) inputted from the camera 21, signals (e.g., which correspond to map information and current vehicle position information) inputted from the navigation device 30, and/or signals (e.g., which correspond to road-vehicle communication) inputted from the communication device 31. When it is determined that the own vehicle 1 is attempting to enter the intersection (step S12: Yes), the controller 10 may advance the process to step S13. On the other hand, when it is not determined that the own vehicle 1 is attempting to enter the intersection (step S12: No), the controller 10 may cause the process to skip a series of routines shown in this flowchart.

Next, in step S13, the controller 10 may determine whether or not a crossing vehicle 8 approaching the own vehicle 1 while traveling in the intersecting lane is present. Specifically, based on signals (e.g., which correspond to image data) inputted from the camera 21, signals inputted from the radar 22, signals (e.g., signals which correspond to inter-vehicle communication) inputted from the communication device 31 and/or other signals, the controller 10 may perform a process for detecting the crossing vehicle 8 approaching the own vehicle 1. As a result, when the crossing vehicle 8 approaching the own vehicle 1 is detected, the controller 10 may determine that the crossing vehicle 8 is present (step S13: Yes), and the process may advance to step S14. On the other hand, when the crossing vehicle 8 approaching the own vehicle 1 is not detected, the controller 10 may determine that the crossing vehicle 8 is not present (step S13: No) so that the process may skip the series of routines shown in this flowchart.

Next, in step S14, the controller 10 may calculate the time te. As described above, in the case where the own vehicle 1 turns right, the time te may be the time required for the own vehicle 1 to finish passing through the first intersecting lane 91 where the crossing vehicle 8 is traveling. Further, in the case where the own vehicle 1 turns left, the time te may be the time required for the own vehicle 1 to finish merging into the first intersecting lane 91 where the crossing vehicle 8 is traveling.

Next, in step S15, the controller 10 may set the virtual area W based on the speed V of the crossing vehicle 8 and the time te. Specifically, the controller 10 may set the virtual area W which extends from the rear end 8b of the crossing vehicle 8 in the advancing direction of the crossing vehicle 8 by the length X, and which has the width Y.

Step S16 may include setting of the candidate path (steps S16a to S16d) and calculation of the path cost (step S16e).

In step S16a, the controller 10 may start the setting of one candidate path. Specifically, the controller 10 may start gradually extending one candidate path from the front end 1a of the own vehicle 1 in the advancing direction of the own vehicle 1.

Next, in step S16b, the controller 10 may determine whether or not the extending candidate path intersects with the virtual area W. When it is not determined that the candidate path intersects with the virtual area W (step S16b: Yes), the controller 10 may advance the process to step S16c.

Next, in step S16c, the controller 10 may determine whether or not the length of the candidate path has reached the value specified in advance. When it is determined that the length of the candidate path has reached the value (step S16c: Yes), the controller 10 may stop extending the candidate path, and may advance the process to step S16e. On the other hand, when it is not determined that the length of the candidate path has reached the value specified in advance (step S16c: No), the controller 10 may cause the process to return to step S16b to further extend the candidate path.

To the contrary, when it is determined in step S16b that the candidate path intersects with the virtual area W (step S16b: Yes), the controller 10 may advance the process to step S16d.

Next, in step S16d, the controller 10 may set a candidate path which extends to a point in front of the virtual area W. Specifically, the controller 10 may set the candidate path having the end point thereof at a point in front of the virtual area W (which may corresponds to the above-mentioned point P2, P3). In other words, the end point of the candidate path may be set at a point before the candidate path reaches the periphery of the virtual area W.

Next, in step S16e, the controller 10 may calculate the path cost of the candidate path. The path cost may include costs relating to the speed, the acceleration and lateral acceleration of the own vehicle 1, a path change rate, obstacles and the like. These costs may be appropriately set. In general, the path cost may include a movement cost and a safety cost. For example, in the case where the own vehicle travels in a straight path, a movement distance may be short so that a movement cost may be low. However, when the own vehicle 1 travels in a path which avoids obstacles or the like, a movement distance may be long so that a movement cost may be increased. Further, the movement cost may increase as the lateral acceleration increases. As described above, the controller 10 may store a value obtained by using the plurality of sampling points in the memory 12 as the path cost of the candidate path.

The controller 10 may perform such process in step S16 until the predetermined number of candidate paths are set. As a result, the path costs of the respective candidate paths may be stored in the memory 12.

Next, in step S17, the controller 10 may set the target path. To be more specific, based on the path costs of the respective candidate paths stored in the memory 12, the controller 10 may select the candidate path having the minimum path cost, and may set the selected candidate path as the target path.

Next, in step S18, the controller 10 may transmit control signals to the engine control device 51, the brake control device 52, and the steering control device 53 to cause the own vehicle 1 to travel along the target path. The control signals may be generated based on a speed control of the own vehicle 1 and the control amount of steering control set for each sampling point of the target path.

Next, exemplary manner of operation and possible advantageous effects according to the embodiment will be described.

According to this configuration, the controller 10 may set the virtual area W. The virtual area W may be configured to move with the advance of the crossing vehicle 8, and to extend in the advancing direction of the crossing vehicle 8. The controller 10 may set such a virtual area W between the own vehicle 1 and the crossing vehicle 8. Further, the controller 10 may set the plurality of candidate paths such that the plurality of candidate paths are prevented from passing through the virtual area W. With such a configuration, it may be possible to set the plurality of candidate paths for causing the own vehicle 1 to travel such that a collision between the own vehicle 1 and the crossing vehicle 8 is avoided with certainty. Further, the controller 10 does not set a candidate path which passes through the virtual area W and hence, it may be possible to reduce a calculation load for the candidate path. In other words, according to the present disclosure, it may be possible to set the candidate paths which are capable of reducing a calculation load while avoiding a collision between the own vehicle 1 and the crossing vehicle 8.

Further, the controller 10 may be configured to set the candidate paths which extend from the own vehicle 1 to points in front of the virtual area W (e.g., to points before the candidate paths reach the periphery of the virtual area W). According to this configuration, it may be possible to set various candidate paths including candidate paths for causing the own vehicle 1 to stop at the point in front of the virtual area W. As a result, it may be possible to set the candidate paths which can avoid a collision with the crossing vehicle 8 with more certainty.

Further, the controller 10 may be configured to set the virtual area W having the length X which corresponds to the time te required for the own vehicle 1 to finish passing through the first intersecting lane 91 (e.g., in the case where the own vehicle 1 turns right), or which corresponds to the time te required for the own vehicle 1 to finish merging into the first intersecting lane 91 (e.g., in the case where the own vehicle 1 turns left). According to this configuration, the controller 10 can set the length X of the virtual area W to a value which corresponds to the time required for the own vehicle 1 to finish moving to a position where a collision with the crossing vehicle 8 can be avoided. By setting the virtual area W having such a length, it may be possible to avoid a collision between the own vehicle 1 and the crossing vehicle 8 with certainty.

Further, the controller 10 may be configured to set the length X of the virtual area W based on a distance obtained by multiplying the speed V of the crossing vehicle 8 by the time te required for the own vehicle 1 to finish passing through the first intersecting lane 91 (e.g., in the case where the own vehicle 1 turns right), or by the time te required for the own vehicle 1 to finish merging into the first intersecting lane 91 (e.g., in the case where the own vehicle 1 turns left). According to this configuration, the controller 10 can set the length X of the virtual area W to a value which corresponds to the time required for the own vehicle 1 to finish moving to a position where a collision with the crossing vehicle 8 can be avoided and to the speed V of the crossing vehicle 8. By setting the virtual area W having such a length X, it may be possible to avoid a collision between the own vehicle 1 and the crossing vehicle 8 with certainty.

The controller 10 according to the above-mentioned exemplary embodiment may assist traveling of the own vehicle 1 at the intersection 7 having a T shape. However, the present disclosure is not limited to such a mode. For example, the present disclosure may be also applicable to the own vehicle which enters an intersection having a cross shape or the like.

Further, the controller 10 according to the above-mentioned exemplary embodiment may set the plurality of candidate paths via a path search which uses a state lattice method. However, the present disclosure is not limited to such a mode. For example, the present disclosure may be also applicable to a vehicle control device which sets candidate paths using other methods, such as a potential method, a spline interpolation function, A-star, or RRT.

### Reference Signs List

1 own vehicle
8 crossing vehicle
10 controller
21 camera (an example of a crossing vehicle detection sensor)
22 radar (an example of a crossing vehicle detection sensor)
31 communication device (an example of a crossing vehicle detection sensor)
90 own-vehicle lane
91 first intersecting lane (intersecting lane)
100 vehicle control device
R1 to R3 candidate path
W virtual area

## Claims

1. A vehicle control device (100) which is configured to assist traveling of a vehicle, provided that a lane intersecting with an own-vehicle lane at an intersection at a time of an own vehicle (1) traveling in the own-vehicle lane (90) entering the intersection is defined as an intersecting lane (91, 92), and a vehicle traveling in the intersecting lane (91, 92) is defined as a crossing vehicle (8), the vehicle control device (100) comprising:
a crossing vehicle detection sensor (21, 22, 31) configured to detect the crossing vehicle (8) approaching the own vehicle (1) while traveling in the intersecting lane; and
a controller (10) configured to set a plurality of candidate paths (R1, R2, R3) extending from the own vehicle, and assist traveling of the own vehicle (1) based on the plurality of candidate paths (R1, R2, R3), wherein
the controller (10) is configured to set, between the own vehicle (1) and the crossing vehicle (8), a virtual area (W) which is configured to move with advance of the crossing vehicle (8), and which is configured to extend in an advancing direction of the crossing vehicle (8), and set the plurality of candidate paths (R1, R2, R3) such that the plurality of candidate paths (R1, R2, R3) are prevented from passing through the virtual area (W) .

2. The vehicle control device (100) according to claim 1, wherein the controller (10) is configured to set one or more of the plurality of candidate paths to extend from the own vehicle to a point (P2, P3) in front of the virtual area (W).

3. The vehicle control device (100) according to claim 1 or 2, wherein the controller (10) is configured to set the virtual area (W) having a length which corresponds to a time required for the own vehicle (1) to finish passing through the intersecting lane (91, 92) where the crossing vehicle (8) travels, or a time required for the own vehicle to finish merging into the intersecting lane (91, 92) .

4. The vehicle control device (100) according to claim 3, wherein the controller (10) is configured to set the length of the virtual area (W) based on a distance obtained by multiplying a speed of the crossing vehicle (8) by the time required for the own vehicle (1) to finish passing through the intersecting lane (91, 92) where the crossing vehicle (8) travels, or by the time required for the own vehicle (1) to finish merging into the intersecting lane (91, 92).

5. A vehicle control method for assisting traveling of a vehicle, provided that a lane intersecting with an own-vehicle lane at an intersection at a time of an own vehicle (1) traveling in the own-vehicle lane (90) entering the intersection is defined as an intersecting lane (91, 92), and a vehicle traveling in the intersecting lane (91, 92) is defined as a crossing vehicle (8), the method comprising:
detecting, by a crossing vehicle detection sensor (21, 22, 31), the crossing vehicle (8) approaching the own vehicle (1) while traveling in the intersecting lane;
setting, by a controller (10), a plurality of candidate paths (R1, R2, R3) extending from the own vehicle; and
assisting, by the controller (10), traveling of the own vehicle (1) based on the plurality of candidate paths (R1, R2, R3),
wherein the method further comprises, for setting the plurality of the candidate paths:
setting, by the controller (10), between the own vehicle (1) and the crossing vehicle (8), a virtual area (W) which is configured to move with advance of the crossing vehicle (8), and which is configured to extend in an advancing direction of the crossing vehicle (8); and
setting, by the controller (10), the plurality of candidate paths (R1, R2, R3) such that the plurality of candidate paths (R1, R2, R3) are prevented from passing through the virtual area (W).

6. The method according to claim 5, wherein one or more of the plurality of candidate paths (R1, R2, R3) are set to extend from the own vehicle (1) to a point (P2, P3) in front of the virtual area (W).

7. The method according to claim 5 or 6, wherein, when setting the virtual area (W), the controller (10) sets the virtual area (W) having a length which corresponds to a time required for the own vehicle (1) to finish passing through the intersecting lane (91, 92) where the crossing vehicle (8) travels, or a time required for the own vehicle to finish merging into the intersecting lane (91, 92) .

8. The method according to claim 7, wherein the controller (10) sets the length of the virtual area (W) based on a distance obtained by multiplying a speed of the crossing vehicle (8) by the time required for the own vehicle (1) to finish passing through the intersecting lane (91, 92) where the crossing vehicle (8) travels, or by the time required for the own vehicle (1) to finish merging into the intersecting lane (91, 92).

9. A computer program product comprising computer-readable instructions that, when loaded and run on a computer, cause the computer to perform the method according to any one of claims 5 to 8.
